# FASCICULE DE BREVET EUROPEEN

(11) **EP 0 729 636 B1**
(45) Date de publication et mention de la délivrance du brevet: **21.07.1999**
(21) Numéro de dépôt: 94900209.1
(22) Date de dépôt: 18.11.1993
(51) Int. Cl.: G21F 5/002

(54) **CUVE DE STOCKAGE D'UNE SOLUTION RADIOACTIVE DE MATIERES FISSILES**
LAGERBEHÄLTER FÜR EINE RADIOAKTIVE LÖSUNG SPALTBAREN MATERIALS
STORAGE TANK FOR A RADIOACTIVE FISSILE MATERIAL SOLUTION

(30) Priorité: 19.11.1992 FR 9213906
(43) Date de publication de la demande: 04.09.1996
(73) Titulaire: COMPAGNIE GENERALE DES MATIERES NUCLEAIRES (COGEMA), 78141 Velizy-Villacoublay (FR)
(72) Inventeur: NIEZBORALA, Jean-Marc, F-92500 Rueil-Malmaison (FR); BARA, Jacques, F-78125 Hermeray (FR); JUSTIN, François, F-91140 Villebon-sur-Yvette (FR)
(74) Mandataire: Le Roux, Martine
(86) Numéro de dépôt international: FR9301135
(87) Numéro de publication internationale: WO9411883

(56) Documents cités:
- EP-A- 0 269 885
- DE-A- 2 300 620
- DE-A- 3 807 775
- DE-U- 9 109 368
- FR-A- 2 543 353
- GB-A- 855 420
- US-A- 3 882 313

## Description

La présente invention a pour objet une cuve destinée au stockage de solutions actives de matières fissiles.

Lesdites solutions actives de matières fissiles doivent être entreposées ou stockées dans des cuves ou réservoirs dont la géométrie et/ou les constituants permettent d'éviter les risques de criticité. On parle de cuves sous-critiques.

On connaît à ce jour des cuves, renfermant un volume de matériau neutrophage au contact duquel ou au sein duquel est ménagé au moins un espace interne ou lame destiné à contenir la solution active.

On utilise notamment des cuves parallèlépipédiques comportant une lame de solution active qui présente une section transversale rectangulaire ou des cuves cylindriques comportant une lame de solution active annulaire. Pour éviter la formation de masses critiques, ladite lame parallèlépipédique doit présenter une section transversale rectangulaire de faible largeur et de la même façon, ladite lame annulaire est limitée en largeur.

De telles configurations ne sont pas satisfaisantes car elles limitent fortement les capacités de stockage.

On ne peut toutefois concevoir d'augmenter sans limite la longueur ou le diamètre desdites cuves car il se pose alors des problèmes d'encombrement, de rigidité et de fabrication.

On a proposé dans la demande FR-A-2 212 820 un perfectionnement aux cuves cylindriques à lames annulaires.

On propose présentement un nouvel agencement pour des cuves de stockage de solutions actives de matières fissiles.

Ledit nouvel agencement permet notamment, pour un volume stocké donné, de réduire l'encombrement.

Selon l'invention les cuves comprennent au moins une cellule destinée à contenir la solution active et de la matière neutrophage solide pour éviter les risques de criticité ; cellule, au sein de laquelle on multiple les surfaces en vis-à-vis entre ladite solution active et ladite matière neutrophage; des parois métalliques séparant ladite solution active de ladite matière neutrophage.

De façon caractéristique, un réseau de tubes sensiblement verticaux et renfermant de la matière neutrophage solide, est aménagé au sein de ladite cellule ; lesdits tubes présentant des parois métalliques et étant disposés dans des compartiments, délimités par d'autres parois métalliques, répartis dans ladite solution active.

Lesdits tubes peuvent être de forme quelconque. ns peuvent notamment présenter une section transversale circulaire, carrée, ovale (éllipsoïdale)... La même remarque s'applique à la forme de la cellule ou des cellules et à celle de la cuve.

Ladite matière neutrophage solide est celle classiquement utilisée dans ce domaine technique. Elle peut notamment consister en du platre polyéthylène boré (PPB), du béton boré, en des bitumes ou permali borés...

Ladite solution active et ladite matière neutrophage solide sont séparées par des parois métalliques; généralement deux parois métalliques; l'une d'entre elles consistant en la paroi des tubes du réseau.

Le matériau constitutif desdites parois est généralement de l'acier inoxydable. D'autres matériaux peuvent toutefois intervenir, tels que le zirconium ou le titane, notamment pour des parois en contact avec la solution active.

La présence de ces parois, au sein des cuves selon l'invention est particulièrement avantageuse. Lesdites parois, quelle que soit la variante de réalisation, assurent de nombreuses fonctions. En plus de leur fonction de rétention de matériau (matériau neutrophage solide ou solution active), elles contribuent notamment à renforcer la rigidité de l'ensemble, à maitriser sa géométrie, à protéger ledit ensemble de la corrosion, du feu ... Elles interviennent également avantageusement dans sa réalisation. On comprendra mieux l'intérêt desdites parois, à la lecture de la description qui suit.

Selon l'invention, les tubes renferment la matière neutrophage et sont disposés dans des compartiments délimités par des parois métalliques et répartis dans la solution active. Selon ce mode de réalisation, les parois métalliques qui séparent la solution active de la matière neutrophage consistent donc d'une part, en la paroi des tubes qui renferment ladite matière neutrophage et d'autre part, en la paroi des compartiments au sein desquels sont positionnés lesdits tubes. Ces deux types de parois peuvent être en acier inoxydable. On peut également prévoir des tubes en acier inoxydable pour la matière neutrophage et des parois en zirconium ou titane pour les compartiments à l'intérieur desquels sont positionnés lesdits tubes de matière neutrophage.

Selon une variante de l'invention, les tubes de matière neutrophage se présentent avantageusement sous la forme de caisson, en acier inoxydable, remplis de matière neutrophage. Lesdits caissons sont disposés dans les compartiments répartis dans la solution active.

Lesdits compartiments ont été aménagés au sein de la cellule avant son remplissage. On a pu notamment prévoir sur la plaque de fond de ladite cellule des lèvres de soudage, dans lesquelles on a positionné puis soudé lesdits compartiments. Il s'agit en fait de tubes, dimensionnés pour recevoir les tubes de matière neutrophage.

Lesdits tubes de matière neutrophage sont avantageusement posés - à l'intérieur desdits compartiments - sur le fond de la cellule ou sur des plots de positionnement, eux-même disposés sur le fond de la cellule. Lesdits tubes sont ainsi aisément manipulables par le haut, ce qui permet notamment l'inspection complète de la matière neutrophage, voire son remplacement.

Entre les deux types de parois - parois des tubes de matière neutrophage et parois des compartiments à l'intérieur desquels sont disposés lesdits tubes - il se trouve défini un volume, qui avantageusement peut être utilisé pour la circulation d'un fluide de refroidissement. Une telle circulation d'un fluide de refroidissement, peut être mise en oeuvre selon différentes variantes.

On préconise que lesdits volumes communiquent avec des orifices ménagés à la base de la cuve. Par lesdits orifices, on pourra prévoir l'injection forcée d'un fluide de refroidissement qui s'évacuera par le haut.

On peut, grâce aux mêmes orifices, mettre en oeuvre un refroidissement intrinsèque, par convection naturelle d'air ambiant. A cette fin, on surélève la cuve et on fait déboucher lesdits orifices à l'air ambiant.

Ce mode de réalisation de l'invention, mis en oeuvre avec ledit refroidissement intrinsèque est particulièrement préféré.

Quel que soit le mode de réalisation de l'invention, la cellule qui renferme le réseau de tubes est avantageusement munie d'un couvercle. Un tel couvercle contribue à la stabilisation, à la rigidité de l'ensemble.

Quel que soit l'agencement du ou des réseau(x) de tubes au sein des cuves de stockage selon l'invention (lesdites cuves pouvant contenir plusieurs cellules), on peut par ailleurs y trouver :
- des moyens d'homogénéisation de la solution active ;
- des moyens de refroidissement de ladite solution active.

A titre d'exemple de moyens d'homogénéisation, on peut citer un système de circulation de ladite solution ou un système de bullage de gaz dans le réseau de tubes (premier mode de réalisation) ou dans les espaces intermédiaires (second mode de réalisation)...

A titre d'exemple de moyens de refroidissement, on peut citer des serpentins immergés ou des épingles de refroidissement plongées... De tels moyens de refroidissement forcé peuvent coexister, selon le seconde mode de réalisation de l'invention, avec ceux assurant le refroidissement intrinsèque par convection naturelle décrits ci-dessus.

On peut, par ailleurs, localiser une cellule à réseau de tubes, selon l'invention, dans l'espace central d'une cuve annulaire traditionnelle, de façon à optimiser l'utilisation des volumes. Une telle cuve de l'invention permet de stocker de la solution active d'une part dans la lame annulaire et d'autre part, dans l'espace intermédiaire entre les parois des compartiments au sein desquels sont disposés les tubes renfermant la matière neutrophage.

Le nombre de tubes et leur répartition au sein d'une cellule de cuves selon l'invention résultent bien évidemment du calcul de criticité, en fonction du mode de réalisation choisi.

Les cuves de l'invention permettent pour le stockage d'une quantité donnée de solution active de faire une grande économie de surface au sol.

Lesdites cuves, plus compactes, possèdent aussi une meilleure stabilité. Leur rigidité et leur stabilité mécanique leur confèrent une bonne résistance sismique.

La réduction d'encombrement rend plus aisé le transport de l'équipement et sa mise en place dans des bâtiments nucléaires, notamment lors d'opérations de rénovation.

De plus, pour le stockage d'une solution active donnée, on peut utiliser une cuve de l'invention avec des espaces intermédiaires qui présentent des dimensions correspondant sensiblement à deux fois la largeur d'une lame de cuve traditionnelle. Cela permet d'introduire dans les solutions stockées des instruments de mesure (capteurs, sondes, ...) ou des moyens d'homogénéisation de taille supérieure à celle de ceux utilisés dans les cuves à lame.

On se propose maintenant de décrire l'invention en référence aux figures annexées sur lesquelles :
- Figure 1 est une coupe verticale selon I-I d'une cuve selon l'invention ;
- Figure 2 est une vue en plan de cette dernière cuve.

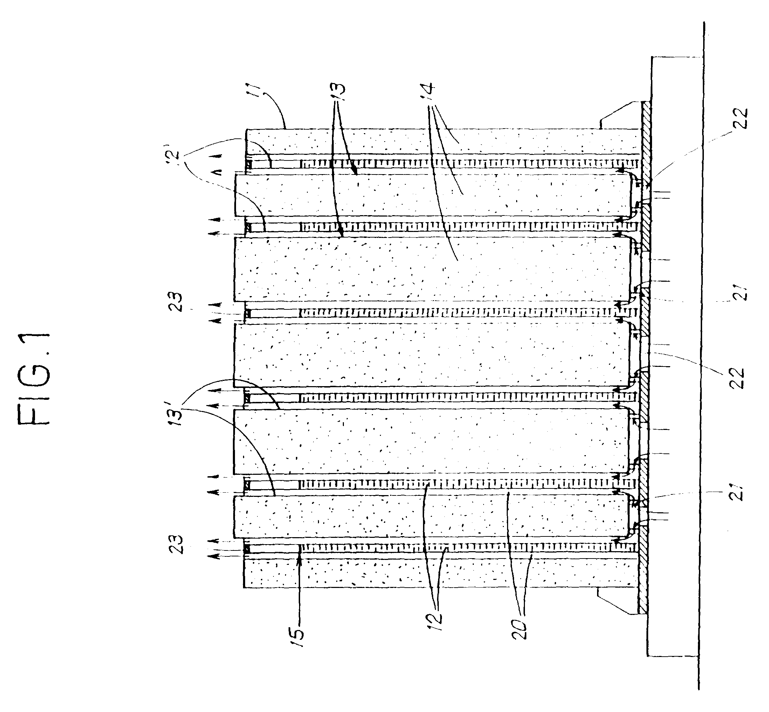

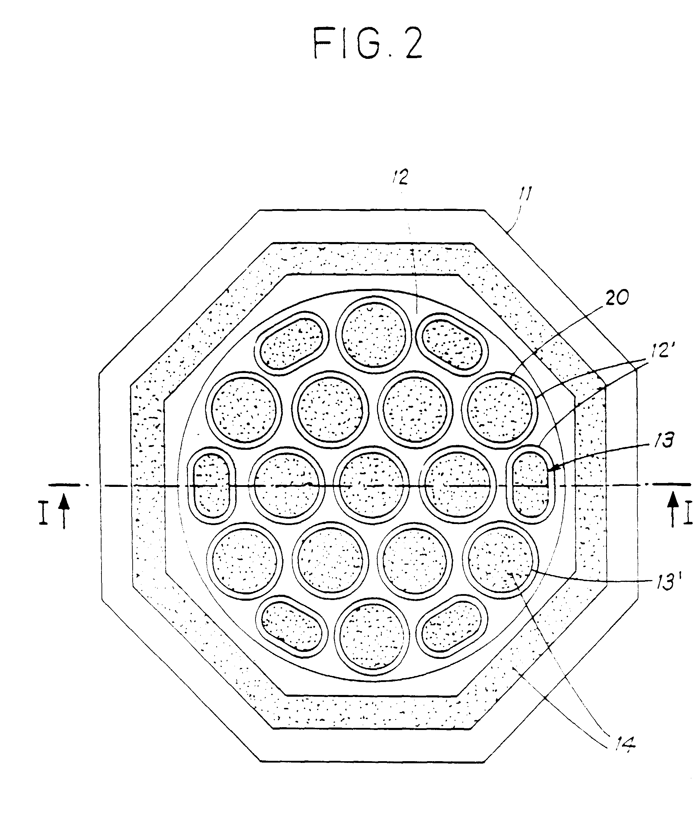

Sur lesdites figures 1 et 2, on a représenté
- en 11 la cuve de stockage,
- en 12, la solution active de matières fissiles stockée dans les espaces intermédiaires,
- en 13 les tubes renfermant la matière neutrophage,
- en 13' les parois métalliques verticales desdits tubes,
- en 14 ladite matière neutrophage.

Les tubes 13 sont disposés dans des compartiments répartis dans la solution active 12. Lesdits compartiments sont délimités par des parois métalliques 12'.

On a indiqué en 15 le niveau du liquide à l'intérieur de la cuve 11.

Selon la variante préférée illustrée, les tubes de matière neutrophage 13 sont disposés dans des compartiments définissant ainsi des volumes 20 pour la circulation par convection d'air ambiant. Ladite circulation est schématisée par des flèches sur la figure 3. Lesdits tubes sont disposés sur des plots 21. L'air pénètre par les orifices 22 ménagés à la base de la cuve ; ladite cuve étant surélevée.

On a enfin représenté en 23 un couvercle ajouré. Ledit couvercle a notamment pour fonction de stabiliser les tubes 13 de matière neutrophage 14.

L'intérêt des cuves de l'invention est mis en évidence par les chiffres donnés dans le tableau ci-après.

On a dimensionné pour des volumes donnés de solution active à stocker, une cuve annulaire selon l'art antérieur et une cuve à réseau de tubes selon la présente invention et calculé les gains de surface.

| Volume de solution active à stocker (m³) | Diamètre d'emprise au sol (gain) | | |
|---|---|---|---|
| | | Réseau de tubes | |
| | Cuve annulaire (m) | INVENTION | |
| | | (m) | Gain de surface |
| 0,5 | 2,7 | 1,9 | 32 % |
| 1 | 3,3 | 2,33 | 50 % |
| 2 | 4,9 | 2,7 | 69 % |
| 4 | 6 | 3 | 75 % |

## Revendications

1. Cuve de stockage de solutions actives de matières fissiles, ladite cuve (11) comportant au moins une cellule destinée à contenir une solution active (12) et de la matière neutrophage solide (14) pour éviter les risques de criticité, des parois métalliques (12', 13') séparant ladite solution active (12) de ladite matière neutrophage solide (14); cuve caractérisée en ce qu'un réseau de tubes (13), sensiblement verticaux et renfermant de la matière neutrophage solide (14), est aménagé au sein de ladite cellule; lesdits tubes (13) présentant des parois métalliques (13') et étant disposés dans des compartiments, eux-même délimités par des parois métalliques (12'), répartis dans ladite solution active (12).

2. Cuve selon la revendication 1, caractérisée en ce que les volumes (20) compris entre lesdits tubes (13) et lesdites parois (12') desdits compartiments sont utilisés pour la circulation d'un fluide de refroidissement.

3. Cuve selon la revendication 2, caractérisée en ce que lesdits volumes (20) communiquent avec des orifices (22) ménagés à la base de la cuve (11).

4. Cuve selon la revendication 3, caractérisée en ce que ladite cuve (11) est surélevée et en ce que lesdits orifices (22) débouchent à l'air ambiant.

5. Cuve selon l'une quelconque des revendications 1 à 4, caractérisée en ce qu'elle comporte en outre des moyens d'homogénéisation de ladite solution active (12).

6. Cuve selon l'une quelconque des revendications 1 à 5, caractérisée en ce qu'elle comporte en outre des moyens de refroidissement au sein de ladite solution active (12).

7. Cuve selon l'une quelconque des revendications 1 à 6, caractérisée en ce qu'il s'agit d'une cuve annulaire au sein de l'espace central de laquelle on trouve au moins une cellule contenant ledit réseau de tubes (13).

## Patentansprüche

1. Lagerbehälter für aktive Lösungen von spaltbaren Materialien, wobei der Lagerbehälter (11) mindestens eine Zelle für die Aufnahme einer aktiven Lösung (12) und eines festen neutrophagen Materials (14) zur Vermeidung der Risiken eines kritischen Zustandes, sowie Metallwände (12',13'), welche die genannte aktive Lösung (12) von dem genannten festen neutrophagen Material (14) trennen, umfaßt,dadurch gekennzeichnet, daß im Innern der genannten Zelle ein Netz von im wesentlichen vertikalen Rohren (13) angeordnet ist, die das feste neutrophage Material (14) enthalten, wobei die genannten Rohre (13) Metallwände (13') aufweisen und in Abteilen angeordnet sind, die ihrerseits von Metallwänden (12') begrenzt sind, die in der genannten aktiven Lösung (12) verteilt sind.

2. Behälter nach Anspruch 1, dadurch gekennzeichnet, daß die Zwischenräume (20) zwischen den genannten Rohren (13) und den genannten Wänden (12') der genannten Abteile für die Zirkulation einer Kühlflüssigkeit genutzt werden.

3. Behälter nach Anspruch 2, dadurch gekennzeichnet, daß die genannten Zwischenräume (20) mit Öffnungen (22) in Verbindung stehen, die in der Basis des Behälters (11) vorgesehen sind.

4. Behälter nach Anspruch 3, dadurch gekennzeichnet, daß der genannte Behälter (11) erhöht angeordnet ist und daß die genannten Öffnungen (22) nach außen in die umgebende Luft münden.

5. Behälter nach einem der Ansprüche 1 bis 4, dadurch gekennzeichnet, daß er außerdem Einrichtungen zur Homogenisierung der genannten aktiven Lösung (12) umfaßt.

6. Behälter nach einem der Ansprüche 1 bis 5, dadurch gekennzeichnet, daß er außerdem Kühleinrichtungen im Innern der genannten aktiven Lösung (12) umfaßt.

7. Behälter nach einem der Ansprüche 1 bis 6, dadurch gekennzeichnet, daß es sich dabei um einen ringförmigen Behälter handelt, in dessen Innern sich ein zentraler Hohlraum befindet, in dem mindestens eine das genannte Netz von Rohren (13) enthaltende Zelle angeordnet ist.

## Claims

1. A storage tank for radioactive fissile material solutions, said tank (11) comprising at least one cell for containing a radioactive solution (12) and solid neutron absorbing material (14) for avoiding the risks of criticality, said radioactive solution (12) being separated from said solid neutron absorbing material (14) by metal walls (12', 13'), which tank is characterized in that an array of substantially vertical tubes (13) containing solid neutron absorbing material (14) is arranged within said cell, said tubes (13) having metal walls (13') and being located in compartments which are themselves delimited by metal walls (12') and distributed throughout said radioactive solution (12).

2. The tank according to claim 1, characterized in that the volumes (20) between said tubes (13) and said walls (12') of said compartments are used for the circulation of a cooling fluid.

3. The tank according to claim 2, characterized in that said volumes (20) communicate with orifices (22) created at the base of the tank (11).

4. The tank according to claim 3, characterized in that said tank (11) is raised and in that said orifices (22) are open to the ambient air.

5. The tank according to any one of claims 1 to 4, characterized in that it also comprises means for homogenizing said radioactive solution (12).

6. The tank according to any one of claims 1 to 5, characterized in that it also comprises cooling means within said radioactive solution (12).

7. The tank according to any one of claims 1 to 6, characterized in that it is an annular tank within whose central space there is at least one cell containing said array of tubes (13).
